# FASCICULE DE BREVET EUROPEEN

(11) **EP 1 826 993 B1**
(45) Date de publication et mention de la délivrance du brevet: **15.08.2012**
(21) Numéro de dépôt: 07003869.0
(22) Date de dépôt: 26.02.2007
(51) Int. Cl.: H04M 1/725, G06F 3/033, H04M 1/60, H04M 1/73

(54) **Procédé d'adaptation de l'interface homme/machine d'un téléphone et téléphone selon le procédé**
Verfahren zur Anpassung der Mensch-Maschine-Schnittstelle eines Telefons und Telefon gemäß dem Verfahren
Method of adapting the man/machine interface of a telephone and telephone in accordance with the method

(30) Priorité: 27.02.2006 FR 0601736
(43) Date de publication de la demande: 29.08.2007
(73) Titulaire: SAGEM MOBILES, 75015 Paris (FR)
(72) Inventeur: Romao, Fernando, 78360 Montesson (FR)
(74) Mandataire: Lavé, Stéphanie

(56) Documents cités:
- EP-A- 1 505 567
- WO-A-2004/066615
- WO-A-2006/018482
- DE-A1- 10 251 694
- FR-A- 2 859 800
- US-A1- 2002 094 789
- US-A1- 2002 140 667

## Description

### Domaine technique

L'invention se situe dans le domaine des téléphones mobiles et plus particulièrement dans leur ergonomie et leur interface homme/machine.

### Art antérieur

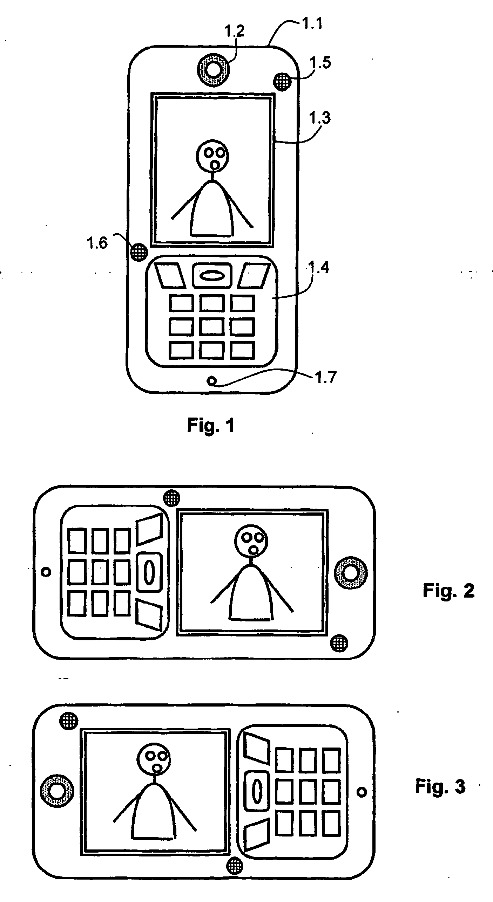

Les téléphones mobiles sont de plus en plus sophistiqués et permettent aujourd'hui l'accès à des services variés comme la visioconférence, la visualisation de photographies, de vidéo et même la réception de télévision. Ces nouveaux téléphones offrent également des fonctionnalités d'assistant numérique personnel, d'appareil photo voire même de caméra numérique. Ces téléphones peuvent être utilisés en mode « mains libres », tenus à la main ou posés sur une table, les genoux ou autres. Lors de l'utilisation de ces multiples fonctionnalités, utilisation pouvant être faite dans diverses circonstances par l'utilisateur, il est nécessaire d'adapter certains paramètres de l'interface homme/machine entre l'appareil et l'utilisateur à la position de celui-ci par rapport à l'appareil, cette adaptation pouvant être différente d'une fonctionnalité à une autre. On peut citer, par exemple, le choix d'un affichage en mode « portrait » ou en mode « paysage », en fonction de l'orientation de l'appareil vis-à-vis de l'utilisateur. Il est par exemple connu d'avoir un appareil disposant d'une commande permettant de faire pivoter l'affichage et offrant trois positions d'affichage, un mode « portrait » correspondant à une disposition verticale de l'appareil telle que celle illustrée Fig. 1, et deux modes « paysage » correspondant à une utilisation horizontale telle que celle illustrée Fig. 2, les deux modes correspondant à un mode « droitier » et à un mode « gaucher », c'est-à-dire avec une rotation horaire ou contre horaire de l'appareil amenant les commandes à droite ou à gauche de l'écran. Dans ce cas l'adaptation de l'interface à une utilisation particulière va être commandée par l'utilisateur.

### Exposé de l'invention

L'invention vise à offrir une adaptation de paramètres de l'interface homme/machine d'un appareil de téléphonie mobile en fonction de l'orientation de cet appareil par rapport à l'utilisateur. Cette orientation est détectée automatiquement par une analyse de l'image de la scène située en avant de l'appareil. Dans un mode particulier de réalisation de l'invention, l'appareil cherche à identifier le visage de l'utilisateur et en particulier l'axe des yeux pour en déduire l'orientation de l'appareil vis-à-vis de l'utilisateur.

De cette façon un utilisateur peut basculer, par exemple, l'affichage de son téléphone dans le mode « portrait » ad hoc par un simple basculement de l'appareil.

L'invention concerne un procédé d'adaptation de l'interface homme/machine d'un téléphone mobile comportant un capteur d'images et composé d'au moins une étape d'analyse d'au moins une image prise par le capteur afin de déterminer au moins une information relative au positionnement de l'utilisateur par rapport au téléphone et d'une étape de détermination d'au moins un paramètre de l'interface homme/machine du téléphone en fonction de ladite ou desdites informations relatives au positionnement de l'utilisateur par rapport au téléphone.

Selon un mode particulier de réalisation de l'invention, l'étape d'analyse d'image comporte une étape d'analyse du flou et de la luminosité de l'image afin de déterminer une utilisation à l'oreille du téléphone.

Le document FR 2 859 800 décrit un dispositif électronique portable équipé d'une caméra comprenant des moyens de détection d'au moins un mouvement en fonction d'une analyse d'au moins deux images successives prises par la caméra, et des moyens d'interface homme/machine associant au moins un événement à au moins un desdits mouvements.

Le document WO 2004/066615 décrit un portable qui est commandé en fonction de mouvements du portable. Le mouvement du portable est détecté à l'aide d'accéléromètres ou d'une caméra montée sur le portable. Des mouvements spécifiques sont utilisés pour allumer/éteindre le portable, faire un zoom d'une image ou faire défiler l'information sur l'écran du portable.

Selon un mode particulier de réalisation de l'invention l'étape d'analyse d'image comporte une étape de détection du visage de l'utilisateur afin de déterminer une utilisation face au téléphone.

Selon un mode particulier de réalisation de l'invention l'étape d'analyse d'image comporte en outre, dans le cas où un visage est détecté, la détermination de l'axe des yeux afin de déterminer l'orientation de l'utilisateur par rapport au téléphone.

Selon un mode particulier de réalisation de l'invention l'étape d'analyse d'image comporte en outre, dans le cas où un visage est détecté, une étape d'estimation de la distance de l'utilisateur en fonction de la taille du visage dans l'image.

Selon un mode particulier de réalisation de l'invention, le téléphone comportant au moins deux antennes, dont au moins une à faible rayonnement et au moins une à plus fort rayonnement, l'étape de détermination d'au moins un paramètre de l'interface homme/machine du téléphone comporte une étape de détermination de l'antenne utilisée selon que le téléphone est utilisé à l'oreille.

Selon un mode particulier de réalisation de l'invention l'étape de détermination d'au moins un paramètre de l'interface homme/machine du téléphone comporte une étape de détermination de l'orientation de l'affichage de l'écran.

Selon un mode particulier de réalisation de l'invention l'étape de détermination d'au moins un paramètre de l'interface homme/machine du téléphone comporte une étape de détermination du choix des canaux de reproduction sonores utilisés pour chaque voie d'un signal sonore multi-voies.

Selon un mode particulier de réalisation de l'invention l'étape de détermination d'au moins un paramètre de l'interface homme/machine du téléphone comporte une étape de mémorisation de l'orientation du téléphone associée à une prise de vue faite avec ce téléphone.

Selon un mode particulier de réalisation de l'invention l'étape de détermination d'au moins un paramètre de l'interface homme/machine du téléphone comporte une étape d'extinction du rétro éclairage de l'écran quand le téléphone est utilisé à l'oreille.

L'invention concerne également un téléphone mobile comportant un capteur d'images qui comporte des moyens d'analyse d'au moins une image prise par le capteur afin de déterminer au moins une information relative au positionnement de l'utilisateur par rapport au téléphone et des moyens de détermination d'au moins un paramètre de l'interface homme/machine du téléphone en fonction de ladite ou desdites informations relatives au positionnement de l'utilisateur par rapport au téléphone.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre un exemple de téléphone selon l'invention dans une position « portrait ».
La Fig. 2 illustre un exemple de téléphone selon l'invention dans une position « paysage droitier ».
La Fig. 3 illustre un exemple de téléphone selon l'invention dans une position « paysage gaucher ».
La Fig. 4 illustre une image de visage mettant en évidence l'axe des yeux.
La Fig. 5 illustre l'architecture d'un exemple de téléphone selon l'invention.
La Fig. 6 illustre un exemple de positionnement d'un utilisateur relativement à son téléphone.
La Fig. 7 illustre la séparation de l'espace relativement au téléphone en une scène avant et une scène arrière.
La Fig. 8 illustre les étapes du procédé selon un exemple de réalisation de l'invention.

### Exposé détaillé de l'invention

La Fig. 1 présente un exemple de téléphone selon l'invention. Le téléphone 1.1 est présenté en position « portrait », c'est-à-dire verticale. La position « portrait » se définit par rapport à l'écran 1.3. Généralement l'écran d'un appareil de téléphonie mobile n'est pas carré mais rectangulaire. La position « portrait » est donc la position dans laquelle l'écran est plus haut que large. Le téléphone est doté de manière conventionnelle d'un clavier 1.4 comprenant des touches numériques permettant de composer un numéro de téléphone ainsi qu'une touche permettant d'indiquer une direction parmi 4, une touche de décrochage de ligne et une touche de raccrochage. Bien évidemment la fonction de ces touches peut varier en fonction de l'application utilisée. Le nombre de touches, leur emplacement ainsi que leur fonction peut varier d'un téléphone à un autre. Dans un premier temps, les téléphones furent dotés d'un moyen de prise de vue, généralement constitué d'un capteur CCD, permettant à l'utilisateur de prendre des clichés ainsi que de petites vidéos. De façon à permettre à l'utilisateur de viser la scène qu'il souhaite prendre en photo à l'aide de l'écran, le capteur CCD est généralement situé au dos de l'appareil. Ce capteur ne permet donc pas de prendre des images de la scène devant l'appareil comme des images de l'utilisateur. Une nouvelle génération d'appareil est dotée d'un second capteur d'image, situé lui sur l'avant de l'appareil. Un capteur de ce type est représenté sous la référence 1.2 sur la Fig.l. La fonction première de ce capteur avant est de permettre un fonctionnement en visiophonie. Dans ce mode, l'utilisateur est à même de visualiser une image de son interlocuteur sur l'écran, tandis que le capteur 1.2 envoie l'image de l'utilisateur à cet interlocuteur. Il est donc courant aujourd'hui de voir des appareils de téléphonie mobile dotés d'un capteur d'images en face avant, à la place ou en plus du capteur situé en face arrière de l'appareil. L'exemple de téléphone de la Fig.1 est également doté de deux haut-parleurs 1.5 et 1.6, situés l'un en haut à droite de l'écran tandis que l'autre est situé en bas à gauche. Un microphone 1.7 est placé sous le clavier.

La Fig. 2, quant à elle, nous montre le même téléphone en position « paysage ». Cette position est qualifiée de « paysage », car dans cette position l'écran apparaît plus large que haut. De plus cette position est également qualifié de position « paysage » en mode « gaucher » car la position du clavier de commande est situé à gauche de l'écran et est donc facilement manipulable pour l'utilisateur avec la main gauche. On remarque que la position astucieuse des haut-parleurs permet de générer une spatialisation stéréophonique tant en mode « portrait » qu'en mode « paysage ». En effet cette disposition permet d'avoir un haut-parleur de chaque côté de l'écran quelle que soit la position d'utilisation.

La Fig. 3 présente le même téléphone dans une position qualifiée de position « paysage » en mode « droitier ».

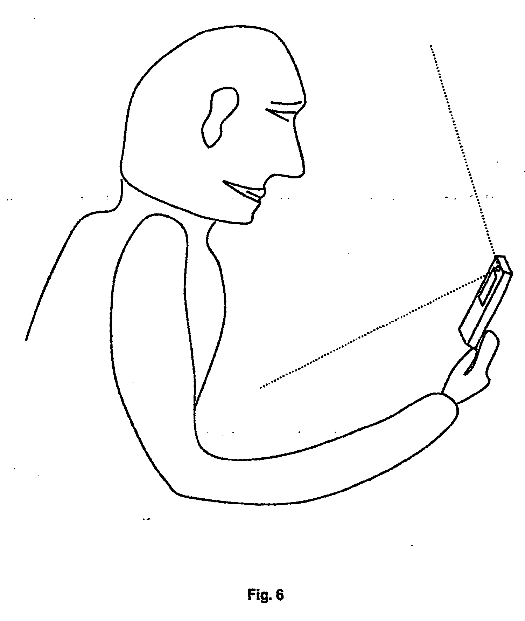

Lorsqu'un utilisateur utilise un téléphone mobile, on peut distinguer trois familles de positionnements de l'utilisateur par rapport à l'appareil. Dans un premier mode, qualifié de mode « à l'oreille », l'utilisateur utilise son téléphone en le tenant contre l'oreille. C'est le mode d'utilisation conventionnel d'un téléphone. De cette façon, le ou les haut-parleurs se trouvent à proximité de l'oreille tandis que le microphone est à proximité de la bouche. Dans un second mode, illustré à la Fig. 6, l'utilisateur se trouve en face de son appareil. Il peut le tenir à la main comme illustré sur la figure ou encore le poser sur une table, sur ses genoux ou autres. Dans ce mode, qualifié de mode « face », l'utilisateur se trouve en face de son appareil. Dans un troisième mode, qualifié de mode « à côté », l'utilisateur se trouve à proximité de l'appareil mais hors de son champ visuel. Il peut, par exemple, mener une communication en mode « mains libres » tout en poursuivant une autre activité.

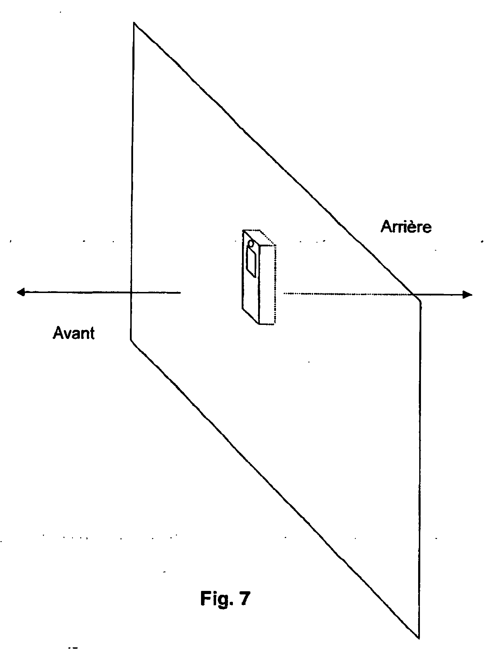

Il semble naturel qu'à chaque famille de positionnements de l'utilisateur par rapport à l'appareil correspondent des modes différents d'interactions entre l'utilisateur et son appareil. Il faut donc adapter l'interface homme/machine de l'appareil pour tenir compte du positionnement de l'utilisateur. L'invention vise donc à déduire des informations quant au positionnement de l'utilisateur par rapport à l'appareil par une analyse d'une ou plusieurs images issues du capteur situé en face avant de l'appareil ou tout au moins situé de façon à pouvoir capturer une image de la scène devant l'appareil. Ce capteur est à même de capturer des images de la scène devant l'appareil sachant que, si l'on considère un plan divisant l'espace et traversant longitudinalement l'appareil comme illustré Fig. 7, on définit la scène avant de l'appareil comme le demi-espace situé du côté de l'écran et la scène arrière comme l'autre demi-espace.

Sur une telle image de la scène avant de l'appareil capturée par le capteur va être fait une recherche de visage. De tels algorithmes de recherche de visage sont connus. La demande de brevet français FR 2880969 déposée le 14/01/2005 par le même demandeur décrit une méthode de détection d'yeux rouges dans une image. Cet algorithme qui consiste en une première étape de détection de visage par identification de zones de peau peut également servir pour détecter les visages dans notre application. Si aucun visage n'est détecté, on en déduit que l'on se trouve dans un positionnement de type « à l'oreille » ou « à côté ». Il est possible de discriminer ces deux familles par une analyse de la luminosité de la scène ainsi que, par exemple, une mesure de flou sur l'image. En effet, lors d'un positionnement « à l'oreille », le capteur se trouve à courte distance de la tête de l'utilisateur, l'image capturée est donc généralement sombre et floue, la distance étant trop courte pour une mise au point correcte du capteur. Par contre, lors d'une utilisation « à côté » l'image perçue reflète la luminosité ambiante et n'a pas de raisons particulières d'être floue.

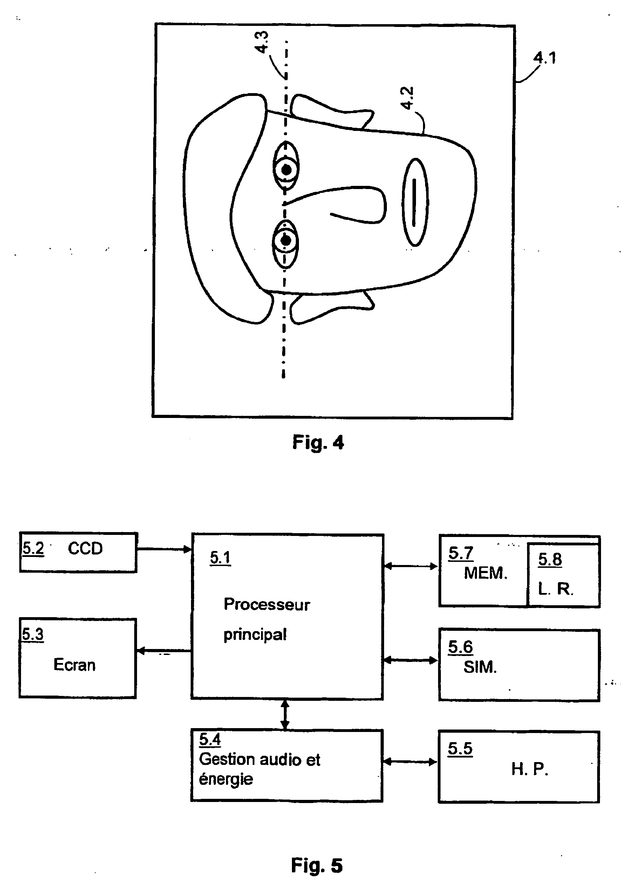

Si une image de visage est détectée, il est possible d'en déduire un certain nombre d'enseignements. D'une part, la taille relative du visage dans l'image permet de déduire une information sur l'éloignement de la personne. On peut donc déterminer si la personne est proche de l'appareil, ou, an contraire s'en tient relativement éloignée Il est également possible d'utiliser la méthode décrite dans la demande de brevet français déjà citée afin de déterminer l'axe des yeux, et la position relative de cet axe dans le visage. La détermination des yeux se fait alors par détermination de trous dans la zone de peau correspondant à un iris repéré par contraste avec le blanc de l'oeil. Les deux yeux étant déterminés, on en déduit l'axe des yeux, tandis que la position relative de cet axe par rapport à la zone de peau permet de déterminer le haut et le bas du visage. Le bas du visage se trouvant du côté de l'axe correspondant à la plus grande partie de la zone de peau. Il est également possible de déterminer le bas du visage par détection de la bouche qui correspond à un trou dans la zone de peau. Cette information permet de déduire si l'appareil est utilisé en mode « portrait » ou en mode « paysage » et dans ce dernier cas, en mode « gaucher » ou « droitier ». Ceci est illustré Fig. 4. On peut y voir une image 4.1 capturée, dans laquelle est détecté un visage 4.2. L'axe des yeux 4.3 est alors détecté. De part le positionnement de cet axe par rapport au visage, on déduira que le haut du visage est à gauche et le bas du visage à droite. L'appareil est donc utilisé en mode « paysage gaucher ».

Ces informations quant au positionnement de l'utilisateur, positionnement « à l'oreille », « à côté » ou encore « face » et dans ce cas, en utilisation « portrait », « paysage gaucher » ou « paysage droitier », ainsi que des informations sur la distance de l'utilisateur ou sa position relative, bien en face ou de biais, permettent l'ajustement automatique d'un certain nombre de paramètres d'interface homme/machine de l'appareil. Il est également possible d'ajuster des paramètres de fonctionnement de l'appareil.

Dans un mode particulier de réalisation de l'invention, il est possible de provoquer le basculement de l'affichage entre les modes « portrait », « paysage droitier » ou « paysage gaucher ». Un utilisateur en train de visualiser une émission de télévision voit l'affichage basculer conséquemment à un basculement de l'appareil, et cela de manière totalement automatique.

Dans un mode particulier de réalisation de l'invention, l'appareil est doté de moyens de reproduction sonore multi-canaux, par exemple stéréophonique. Dans ce cas, une spatialisation du son est créée par la diffusion de deux voies sonores émises en au moins deux points différents. Une restitution fidèle de cette spatialisation sonore implique de.connaître l'orientation de l'appareil vis-à-vis de l'utilisateur. En effet, il importe de connaître la position relative à l'utilisateur des haut-parleurs de l'appareil, deux dans l'exemple de réalisation, permettant la restitution sonore. La connaissance de l'orientation de l'appareil associée à la disposition des 2 haut-parleurs en diagonale par rapport à l'écran comme illustré sur les Fig. 1 à 3, permet de déterminer, dans toutes les orientations, quel est le haut-parleur gauche et quel est le haut-parleur droit pour l'utilisateur. Chaque haut-parleur définissant un canal de reproduction sonore, il est donc possible de faire le choix du canal de reproduction sonore utilisé pour chaque voie d'un signal sonore multi-voies.

Dans un mode particulier de réalisation de l'invention, l'appareil est doté d'une fonctionnalité de caméscope. Dans ce mode de fonctionnement, l'appareil enregistre des vidéos prises avec son capteur d'images arrière. En fonctionnement, l'utilisateur utilise l'écran afin de contrôler sa prise de vue, l'image vue par le capteur y étant affichée. Dans ce mode, la connaissance de l'orientation de l'appareil permet d'orienter la vidéo mémorisée de façon à pouvoir la rejouer avec la bonne orientation. On mémorisc donc si la prise de vue est effectuée en mode « paysage » ou « portrait ». Ce mécanisme est également applicable au fonctionnement en appareil photo.

Un téléphone peut également être doté de plusieurs antennes pouvant servir pour l'émission et la réception radio. On sait qu'une des contraintes à laquelle doit obéir un tel appareil concerne le niveau d'émission radio fréquence auquel est exposé l'utilisateur. Ce niveau est connu sous le nom de SAR (« *Specific Absorption Rate* » en anglais). Le SAR diminue rapidement avec la distance, l'utilisation du téléphone à l'oreille est donc la position qui pose le plus de contraintes et expose le plus l'utilisateur aux radio fréquences. Le fait de disposer de plusieurs antennes permet de prévoir une antenne plus faiblement rayonnante, mais de performance plus limitée lors d'une utilisation « à l'oreille » tandis qu'une antenne plus rayonnante mais de meilleure performance peut être utilisée dans les autres modes. La connaissance automatique du mode d'utilisation de l'appareil permet, dans ce cas, le choix de l'antenne à utiliser en fonction du mode d'utilisation. Le choix de l'antenne n'est qu'un exemple de paramètre adapté automatiquement en fonction du mode d'utilisation. On peut prévoir d'adapter également d'autres paramètres. En particulier il est possible d'éteindre le rétro éclairage de l'écran en mode « à l'oreille » de façon à limiter la consommation d'énergie

La Fig. 5 illustre un exemple d'architecture de téléphone selon l'invention. Cette architecture s'organise autours d'un processeur central 5.1. Celui-ci peut recevoir des images en provenance d'un capteur d'images 5.2 tandis qu'il commande un écran 5.3. Il communique avec un module 5.4 de gestion de l'audio et de l'énergie qui pilote, entre autres, un système de haut-parleurs 5.5. La gestion du compte de l'utilisateur et l'authentification se fait au moyen d'une carte SIM 5.6. Les logiciels exécutés par le processeur 5.1 sont stockés dans une mémoire 5.7. Ces logiciels comprennent un module 5.8 spécifique de l'invention qui comprend une fonction de gestion du capteur d'images 5.2 lui permettant d'acquérir des images, un module de reconnaissance de forme tel que décrit plus haut pour la détermination de l'axe des yeux, un module de détermination du positionnement de l'utilisateur en fonction des résultats donnés par le module de reconnaissance de forme ainsi que le module de détermination des paramètres d'interface homme/machine comme l'orientation de l'écran.

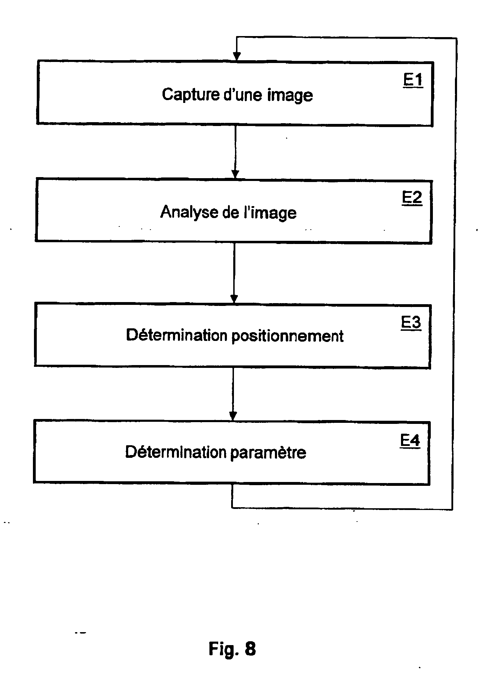

La Fig. 8 illustre les principales étapes du procédé selon un mode de réalisation de l'invention. Lors d'une étape E1, une image de la scène avant de l'appareil est acquise. Cette image est ensuite analysée lors d'une étape E2. En fonction de cette analyse, une détermination du positionnement de l'utilisateur par rapport à l'appareil est menée lors d'une étape E3. Tandis que dans une étape E4, au moins un paramètre de l'interface homme/machine de l'appareil est déterminé en fonction de ce positionnement. Cette opération est menée de manière répétitive.

Il apparaîtra à l'homme du métier que les données extraites par le module de reconnaissance de forme ne représentent que des exemples des données possibles et que de la même façon, les paramètres d'interface homme/machine déterminés en fonction de ces données ne représentent que des exemples de l'ensemble des paramètres que l'on peut déterminer ainsi. Il est possible d'utiliser d'autres données et de déterminer d'autres paramètres sans sortir du cadre de l'invention.

## Revendications

1. Procédé d'adaptation de l'interface homme/machine d'un téléphone mobile (1.1) comportant un capteur d'images (1.2) **caractérisé en ce qu'**il comporte au moins :
- une étape d'analyse (E2, E3) d'au moins une image prise par le capteur afin de déterminer au moins une information relative au positionnement de l'utilisateur par rapport au téléphone correspondant à différents modes d'utilisation du téléphone par l'utilisateur ; et
- une étape de détermination (E4) d'au moins un paramètre de l'interface homme/machine du téléphone en fonction de ladite ou desdites informations relatives au positionnement de l'utilisateur par rapport au téléphone.

2. Procédé selon la revendication 1 où l'étape d'analyse d'image (E2, E3) comporte une étape d'analyse du flou et de la luminosité de l'image afin de déterminer une utilisation à l'oreille du téléphone (1.1).

3. Procédé selon la revendication 1 où l'étape d'analyse d'image (E2, E3) comporte une étape de détection du visage de l'utilisateur afin de déterminer une utilisation face au téléphone (1.1).

4. Procédé selon la revendication 3 où l'étape d'analyse d'image (E2, E3) comporte en outre, dans le cas où un visage (4.2) est détecté, la détermination de l'axe des yeux (4.3) afin de déterminer l'orientation de l'utilisateur par rapport au téléphone (E2, E3).

5. Procédé selon la revendication 3 où l'étape d'analyse d'image (E2, E3) comporte en outre, dans le cas où un visage est détecté, une étape d'estimation de la distance de l'utilisateur en fonction de la taille du visage dans l'image.

6. Procédé selon l'une quelconque des revendications 1 à 5 où, le téléphone (1.1) comportant au moins deux antennes, dont au moins une à faible rayonnement et au moins une à plus fort rayonnement, l'étape de détermination d'au moins un paramètre de l'interface homme/machine du téléphone comporte une étape de détermination de l'antenne utilisée selon que le téléphone (1.1) est utilisé à l'oreille.

7. Procédé selon l'une quelconque des revendications 1 à 5 où l'étape de détermination (E4) d'au moins un paramètre de l'interface homme/machine du téléphone (1.1) comporte une étape de détermination de l'orientation de l'affichage de l'écran.

8. Procédé selon l'une quelconque des revendications 1 à 5 où l'étape de détermination (E4) d'au moins un paramètre de l'interface homme/machine du téléphone comporte une étape de détermination du choix des canaux de reproduction sonores utilisés pour chaque voie d'un signal sonore multi-voies.

9. Procédé selon l'une quelconque des revendications 1 à 5 où l'étape de détermination (E4) d'au moins un paramètre de l'interface homme/machine du téléphone comporte une étape de mémorisation de l'orientation du téléphone associée à une prise de vue faite avec ce téléphone.

10. Procédé selon l'une quelconque des revendications 1 à 5 où l'étape de détermination (E4) d'au moins un paramètre de l'interface homme/machine du téléphone comporte une étape d'extinction du rétro éclairage de l'écran quand le téléphone est utilisé à l'oreille.

11. Téléphone mobile (1.1) comportant un capteur d'images (1.2) **caractérisé en ce qu'**il comporte en outre
- des moyens d'analyse (E2, E3) d'au moins une image prise par le capteur afin de déterminer au moins une information relative au positionnement de l'utilisateur par rapport au téléphone ; et
- des moyens de détermination (E4) d'au moins un paramètre de l'interface homme/machine du téléphone en fonction de ladite ou desdites informations relatives au positionnement de l'utilisateur par rapport au téléphone.

## Claims

1. Method for adapting the man/machine interface of a mobile telephone (1.1) comprising an image sensor (1.2), **characterised in that** it comprises at least:
- a step (E2, E3) of analysing at least one image taken by the sensor in order to determine at least one item of information relating to the positioning of the user in relation to the telephone corresponding to different methods of use of the telephone by the user; and
- a step (E4) of determining at least one parameter of the man/machine interface of the telephone in accordance with the item(s) of information relating to the positioning of the user in relation to the telephone.

2. Method according to claim 1, wherein the image analysis step (E2, E3) comprises a step of analysing the lack of focus and the brightness of the image in order to determine use of the telephone (1.1) in a manner involving the ear.

3. Method according to claim 1, wherein the image analysis step (E2, E3) comprises a step of detecting the face of the user in order to determine use facing the telephone (1.1).

4. Method according to claim 3, wherein the image analysis step (E2, E3) further comprises, in the event that a face (4.2) is detected, establishment of the axis of the eyes (4.3) in order to determine the orientation of the user in relation to the telephone (E2, E3).

5. Method according to claim 3, wherein the image analysis step (E2, E3) further comprises, in the event that a face is detected, a step of estimating the distance of the user in accordance with the size of the face in the image.

6. Method according to any one of claims 1 to 5, wherein, the telephone (1.1) comprising at least two antennae, of which at least one is of weak radiation and at least one is of more powerful radiation, the step of determining at least one parameter of the man/machine interface of the telephone comprises a step of determining the antenna used depending on whether the telephone (1.1) is being used in a manner involving the ear.

7. Method according to any one of claims 1 to 5, wherein the step (E4) of determining at least one parameter of the man/machine interface of the telephone (1.1) comprises a step of determining the orientation of the display of the screen.

8. Method according to any one of claims 1 to 5, wherein the step (E4) of determining at least one parameter of the man/machine interface of the telephone comprises a step of determining the selection of the audio reproduction channels used for each channel of a multi-channel audio signal.

9. Method according to any one of claims 1 to 5, wherein the step (E4) of determining at least one parameter of the man/machine interface of the telephone comprises a step of storing the orientation of the telephone associated with a photograph taken with that telephone.

10. Method according to any one of claims 1 to 5, wherein the step (E4) of determining at least one parameter of the man/machine interface of the telephone comprises a step of shutting off the back-lighting of the screen when the telephone is being used in a manner involving the ear.

11. Mobile telephone (1.1) comprising an image sensor (1.2), **characterised in that** it further comprises
- means (E2, E3) for analyzing at least one image taken by the sensor in order to determine at least one item of information relating to the positioning of the user in relation to the telephone; and
- means (E4) for determining at least one parameter of the man/machine interface of the telephone in accordance with the item(s) of information relating to the positioning of the user in relation to the telephone.

## Patentansprüche

1. Verfahren zur Anpassung der Mensch-Maschine-Schnittstelle eines eine Bilderfassungseinrichtung bzw, Kamera (1.2) umfassenden Mobiltelefons (1.1),
**dadurch gekennzeichnet, dass** es wenigstens umfasst:
- einen Schritt (E2, E2) zur Analyse wenigstens eines von der Kamera aufgenommenen Bildes, um wenigstens eine Information hinsichtlich der Positionierung des Benutzers in Bezug auf das Telefon zu bestimmen, entsprechend unterschiedlichen Benutzungsarten des Telefons durch den Benutzer; und
- einen Schritt (E4) zur Bestimmung wenigstens eines Parameters der Mensch-Maschine-Schnittstelle des Telefons in Abhängigkeit von der (oder den) genannten Information(en) hinsichtlich der Positionierung des Benutzers in Bezug auf das Telefon.

2. Verfahren nach Anspruch 1, wo der Bifdanalyseschritt (E2 E3) einen Schritt zur Analyse der Unschärfe und der Helligkeit des Bildes umfasst, um eine Benutzung des Telefons (1.1) am Ohr zu bestimmten.

3. Verfahren nach Anspruch 1, wo der Bildanalyseschritt (E2, E3) einen Schritt zur Detektion des dem Telefon (1.1) zugewandten Gesicht des Benutzers umfasst.

4. Verfahren nach Anspruch 3, wo der Bildanalyseschritt (E2, E3) in dem Fall, wo ein Gesicht (4.2) detektiert wird, außerdem die Bestimmung der Augenachse (4.3) umfasst, um die Ausrichtung des Benutzers in Bezug auf das Telefon zu bestimmen (E2, E3).

5. Verfahren nach Anspruch 3, wo der Bildanalyseschritt (E2, E3) in dem Fall, wo ein Gesicht (4.2) detektiert wird, außerdem einen Schritt zur Bestimmung des Abstands des Benutzers in Abhängigkeit von der Größe des Gesichts in dem Bild umfasst.

6. Verfahren nach einem der Ansprüche 1 bis 5, wo das Telefon (1.1) wenigstens zwei Antennen umfasst, davon mindestens eine mit schwacher Abstrahlung und mindestens eine mit stärkerer Abstrahlung, wobei der Schritt zur Bestimmung wenigstens eines Parameters der Mensch-Maschine-Schnittstelle, je nach dem, ob das Telefon (1.1) am Ohr benutzt wird, einen Schritt zur Bestimmung der benutzten Antenne umfasst.

7. Verfahren nach einem der Ansprüche 1 bis 5, wo der Schritt (E4) zur Bestimmung wenigstens eines Parameters der Mensch-Maschine-Schnittstelle des Telefons (1.1) einen Schritt zur Bestimmung der Ausrichtung der Anzeige des Bildschirms umfasst.

8. Verfahren nach einem der Ansprüche 1 bis 5, wo der Schritt (E4) zur Bestimmung wenigstens eines Parameters der Mensch-Maschine-Schnittstelle des Telefons einen Schritt zur Bestimmung der Wahl der für jeden Kanal eines Mehrkanal-Tonsignals benutzten Tonwidergabekanäle umfasst.

9. Verfahren nach einem der Ansprüche 1 bis 5, wo der Schritt (E4) zur Bestimmung wenigstens eines Parameters der Mensch-Maschine-Schnittstelle des Telefons einen Schritt zur Speicherung der Ausrichtung des Telefons umfasst, verbunden mit einer mit diesem Telefon gemachten Bildaufnahme.

10. Verfahren nach einem der Ansprüche 1 bis 5, wo der Schritt (E4) zur Bestimmung wenigstens eines Parameters der Mensch-Maschine-Schnittstelle des Telefons einen Schritt zum Löschen der Hintergrundbeleuchtung des Bildschirms umfasst, wenn das Telefon am Ohr benutzt wird.

11. Mobiltelefon (1.1) mit einer Bifdertassurigseinrichtung bzw. Kamera (1.2), **dadurch gekennzeichnet, dass** es außerdem umfaßt:
- Einrichtungen (E1, E2) zur Analyse wenigstens eines von der Kamera aufgenommenen Bildes, um wenigstens eine information hinsichtlich der Positionierung des Benutzers in Bezug auf das Telefon zu bestimmen; und
- Einrichtungen (E4) zur Bestimmung wenigstens eines Parameters der Mensch-Maschine-Schnittstelle des Telefons in Abhängigkeit von der (oder den) genannten Information(en) hinsichtlich der Positionierung des Benutzers in Bezug auf das Telefon
